# EUROPÄISCHE PATENTSCHRIFT

(11) **EP 3 885 717 B1**
(45) Veröffentlichungstag und Bekanntmachung des Hinweises auf die Patenterteilung: **28.06.2023**
(21) Anmeldenummer: 20165464.7
(22) Anmeldetag: 25.03.2020
(51) Int. Cl.: G01F 23/284, G01S 13/88, G01D 11/30, G01D 21/00, G01F 15/18, H01Q 1/22

(54) **MESSANORDNUNG ZUR BEFESTIGUNG AN EINEM BEHÄLTNIS**
MEASURING ARRANGEMENT FOR FIXTURE TO A CONTAINER
AGENCEMENT DE MESURE DESTINÉ À ÊTRE FIXÉ À UN RÉCIPIENT

(43) Veröffentlichungstag der Anmeldung: 29.09.2021
(73) Patentinhaber: VEGA Grieshaber KG, 77709 Wolfach (DE)
(72) Erfinder: Isenmann, Andreas, 77716 Haslach i. K. (DE); Hengstler, Clemens, 77716 Haslach (DE); Sum, Stefan, 77709 Wolfach (DE); Heizmann, Patrick, 77709 Oberwolfach (DE); Allgaier, Stefan, 77709 Oberwolfach (DE); Krämer, Florian, 77796 Mühlenbach (DE)
(74) Vertreter: Patentanwälte Bauer Vorberg Kayser

(56) Entgegenhaltungen:
- EP-A1- 3 385 682
- EP-A1- 3 605 031
- WO-A1-95/12804
- DE-A1- 10 331 044
- DE-A1-102007 029 946
- DE-A1-102007 057 211
- JP-A- H05 107 374
- JP-A- 2001 330 499
- JP-A- 2002 013 965
- US-A1- 2020 041 324

## Beschreibung

Die vorliegende Erfindung betrifft eine Messanordnung zur Anbringung an einem Behältnis gemäß dem Oberbegriff des Patentanspruchs 1 sowie ein Verfahren zum Betreiben einer solchen Messanordnung gemäß dem Oberbegriff des Patentanspruchs 17.

Aus dem Stand der Technik sind verschiedene Messanordnungen zur Anbringung an Behältnissen bekannt. Diese umfassen wenigstens einen Messaufnehmer, eine Übermittlungseinrichtung zur Übermittlung von Messdaten oder Messwerten an eine übergeordnete Einheit, eine Energieversorgung zur Versorgung der Messanordnung mit Energie und eine Aktivierungseinrichtung zur Aktivierung und Deaktivierung der Messanordnung. Die Aktvierungseinrichtung ist in der Regel als manuell oder elektronisch betätigbarer Ein- Ausschalter ausgebildet. Eine solche Messanordnung kann bspw. als berührungslos arbeitendes Radarfüllstandmessgerät ausgebildet sein.

Die berührungslose Radar-Füllstandsmessung wird häufig zur Füllstandsmessung in Tanks eingesetzt. Aktuelle Anwendungen umfassen den Einsatz von Radarfüllstandmessgeräten in relativ großen Tankanlagen wie Raffinerietanks und Tanks auf Frachtschiffen, Lagertanks und Lagersilos und zunehmend auch kleinere Tanks, z. B. in der Prozessindustrie. Wenn der Tank aus Metall besteht, muss das Radarfüllstandmessgerät in einer Öffnung in der Tankwand montiert werden, damit die Radarsignale in den Tank gelangen.

Füllstandsensoren und Grenzstandsensoren ist gemein, dass diese derart montiert werden müssen, dass sie den Füllstand des Füllguts messen können und insbesondere ein Sensorsystem, der sog. Messaufnehmer, in Richtung des zu messenden Füllguts ausgerichtet ist. Insbesondere werden die Sensoren direkt an oder in den Behältern montiert, in welchen sich das Füllgut befindet. In der Praxis sind dabei verschiedene Befestigungssysteme bekannt: unter anderem kann ein Füll- oder Grenzstandsensor mittels eines Flansches mit einem korrespondierendem an dem Behälter angeordneten Gegenflansch verschraubt werden. Alternativ wird in eine Öffnung im Behälter ein Innengewinde eingebracht, so dass der Sensor mit einem korrespondierenden Außengewinde in die Öffnung eingeschraubt werden kann. Ferner sind noch verschiedenen Verklebungen zur Befestigung des Sensors an oder in dem Behälter bekannt. US2020/041324-A1 offenbart eine Radarfüllstandmessanordnung mit einem autarken Radarsensor wobei die Befestigung des Gehäuses an einem Behälter mittels einer Klebung erfolgt.

Im Stand der Technik wird, wenn keine passende Montagemöglichkeit, also bspw. ein Flansch oder Gewindestutzen, vorhanden ist, ein spezieller Montageflansch an dem Behälter angebracht oder ein Gewinde in den Behälter eingebracht. Flansche müssen häufig an den Behältern angeschweißt werden während Gewinde zur Montage der Sensoren am Sensor an- und/oder in den Behälter bzw. dessen Wandung eingebracht werden müssen. Dieses Vorgehen ist unwirtschaftlich und bedeutet einen höheren Fertigungsaufwand, der häufig manuelle Eingriffe erfordert. Je nach Behälterausführung ist eine Flansch- oder Gewindemontage technisch nicht möglich. Beispielsweise dünnwandige Bleche oder Kunststoffbehälter können das Anschweißen eines Flansches oder das Einbringen eines Gewindes erschweren oder unmöglich machen. In diesen Fällen müssen individuelle Befestigungsmöglichkeiten geschaffen werden, die ggf. eine weitere Erhöhung des Fertigungsaufwands bedeuten.

Es gibt jedoch auch eine große Vielzahl von im Handel erhältlichen Lagertanks und Vorratstanks aus nichtmetallischen Materialien, insbesondere aus Kunststoffen und anderen Materialien, die für Mikrowellen durchlässig sind. Einige Tanks sind transportabel und werden für den Transport verwendet, während andere stationär sind und hauptsächlich zur Lagerung dienen.

Bei solchen Tanks ist eine Montage in einer Öffnung in der Tankwand, da diese für die Radarsignale durchlässig ist, nicht erforderlich und kann auch technisch schwierig sein. In einigen Fällen sind die Tankwände flexibel, und ein Loch in der Tankwand bietet möglicherweise keine ausreichende strukturelle Festigkeit für die Montage.

Ferner werden viele kleinere Tanks unter erheblichem Kostendruck hergestellt. Aus diesem Grund ist es nicht möglich, die Tanks bereits zum Zeitpunkt der Produktion mit einer speziellen Schnittstelle für die Montage eines Radarfüllstandmessgeräts zu versehen.Insbesondere bei IBC Behältnissen (IBC = Intermediate Bulk Container) ist eine Bearbeitung des Behälters auch häufig nicht möglich, da diese ständig von einem Lieferanten via Pfandsystem ausgetauscht werden und damit individuelle Anbauten oder das Einbringen zusätzlicher Öffnungen nicht erwünscht sind. Es ist die Aufgabe der vorliegenden Erfindung, eine Messanordnung zur Verfügung zu stellen, die die aus dem Stand der Technik bekannten Nachteile überwindet. Diese Aufgabe wird durch eine Messanordnung mit den Merkmalen des Patentanspruchs 1 gelöst. Ein Verfahren zum Betreiben eines solchen Radarfüllstandmessgeräts ist in Patentanspruch 17 angegeben.

Vorteilhafte Weiterbildungen sind Gegenstand abhängiger Patentansprüche.

Eine erfindungsgemäße Messanordnung zur Anbringung an einem Behältnis umfassend wenigstens einen Messaufnehmer, eine Übermittlungseinrichtung, eine Energieversorgung und eine Befestigungsvorrichtung zum Befestigen der Messanordnung an dem Behältnis zeichnet sich dadurch aus, dass die Befestigungsvorrichtung als Spannvorrichtung ausgebildet ist und eine Aktivierungseinrichtung umfasst, wobei die Aktivierungseinrichtung mechanisch betätigbar ist und derart ausgebildet ist, dass die Aktivierungseinrichtung durch ein Verspannen der Messanordnung mit dem Behältnis betätigbar ist.

Die vorliegende Erfindung bezieht sich im Wesentlichen auf autarke Messanordnungen, insbesondere autarke Füllstand- oder Grenzstandsensoren. Die autarken Füllstand- oder Grenzstandsensoren sind vorzugsweise als Radarsensoren ausgebildet und weisen - um die Autarkie der Sensoren sicher zu stellen - neben einem Messaufnehmer zur Erfassung von Messdaten eine Übermittlungseinrichtung zur, vorzugsweise drahtlosen, Übermittlung erfasster Messdaten oder Messwerte und eine eigene Energieversorgung auf. Die Übermittlungseinrichtung kann bevorzugt ein Funkmodul für eine Schmalbandfunktechnologie (LoRa, Sigfox, LTE-M, NB-IOT) sein, das die Messdaten oder Messwerte in eine Cloud, d.h. auf einen Server im World Wide Web überträgt. Die Energieversorgung ist vorzugsweise als Batterie oder Akkumulator ausgebildet und kann zusätzlich ein Energy-Harvesting-Modul umfassen.

Typische Anwendungsszenarien für solche Feldgeräte umfassen insbesondere Lagerbestandsverwaltung oder Messaufgaben an mobilen Behältnissen.

Zur Anbringung an einem Behältnis bedeutet in diesem Zusammenhang, dass die Messanordnung insbesondere nicht invasiv, d.h. nichtzerstörend, also insbesondere ohne Bohrungen oder andere das Behältnis beschädigende Maßnahmen an dem Behältnis befestigbar ist.

Der Messaufnehmer kann als Sensor und insbesondere als Radarsensor mit einer Sende- und/oder Empfangseinrichtung und einer Antenne zur Abstrahlung von Radarstrahlung ausgebildet sein. Wie oben dargestellt sind Radarsensoren dazu geeignet, eine Füllstandmessung durch eine Wandung eines Kunststoffbehältnisses, bspw. eines Intermediat Bulk Containers (IBC) hindurch durchzuführen.

Unter einer Übermittlungseinrichtung wird eine Schnittstelle zu einem weiteren Gerät, insbesondere einer übergeordneten Einheit oder einem Bedien- und/oder Anzeigegerät verstanden. Die Übermittlungseinrichtung kann bspw. als Funkmodul, das insbesondere nach dem Bluetooth-Low-Energy Standard kommuniziert, ausgestaltet sein. Die Übermittlung kann mittelbar oder unmittelbar erfolgen, d.h. über ein Relais oder einen Repeater oder eine direkte Übermittlung zu der übergeordneten Einheit erfolgen. Weitere mögliche Funkstandards sind LoRa, SigFox, LTE-M und NB-IoT.

Vorzugsweise ist die Spannvorrichtung derart ausgestaltet, dass sie beschädigungsfrei an dem Behältnis oder einer mit dem Behältnis verbundenen Einrichtung anordenbar ist. Die Spannvorrichtung kann damit an dem Behältnis direkt, oder einer damit verbundenen Einrichtung angebracht werden, ohne dass das Behältnis oder die damit verbundene Einrichtung beschädigt wird. Dies ist insbesondere bei Behältnissen wichtig, die häufig ausgetauscht werden und daher Bestandteil eines Pfandsystems sind, oder Behältnisse, die bspw. auf Dichtigkeit geprüft wurden, sodass nachträgliche An- oder Einbauten nicht zulässig sind.

IBCs sind häufig in Gitterkäfigen angeordnet, die ein aus Kunststoff gefertigtes Behältnis umschließen und damit stapelbar und mit Flurförderfahrzeugen transportierbar machen. Als mit dem Behältnis verbundene Einrichtung soll daher insbesondere ein solcher Gitterkäfig verstanden werden. Explizit nicht gemeint ist damit ein an dem IBC nachträglich angebrachter Flansch.

Um eine möglichst einfache Montage zu gewährleisten ist es von Vorteil, wenn die Spannvorrichtung derart ausgestaltet ist, dass sie werkzeugfrei an dem Behältnis oder einer mit dem Behältnis verbundenen Einrichtung anordenbar oder befestigbar ist. Werkzugfrei bedeutet in diesem Zusammenhang insbesondere, dass eine manuelle Montage ohne den Einsatz von Werkzeugen möglich ist. Das ist bspw. der Fall, wenn Schraubverbindungen so ausgestaltet sind, dass diese ohne Werkzeug von Hand festgezogen und gelöst werden können.

Eine werkzeugfreie Montage kann bspw. erreicht werden, wenn die Spannvorrichtung als Spanngurt ausgebildet ist. Durch einen Spanngurt kann die Messanordnung einfach an dem Behältnis oder der damit verbundenen Einrichtung - bspw. Fixierpunkten - befestigt werden. Ausreichend als Fixierpunkte sind bspw. Ösen, Stangen oder dergleichen, in die der Spanngurt eingefädelt oder ein an dem Spanngurt befestigter Haken eingehakt werden kann. Ein Spanngurt kann auch das gesamte Behältnis umspannen und so an diesem befestigt werden.

Der Spanngurt selbst kann zugfest oder elastisch ausgestaltet sein. Mittels eines zugfesten Gurtes kann mit einer Spanneinrichtung, bspw. einer Ratsche der Gurt nach dem Befestigen, bspw. Einfädeln oder Einhaken, verkürzt und damit gespannt werden. Werden die Fixierpunkte passend angeordnet, wird die Messanordnung an das Behältnis gedrückt und mit diesem verspannt.

Alternativ kann der Spanngurt auch elastisch ausgestaltet sein und so selbst zur Verspannung genutzt werden. Auch hier kann der Spanngurt an einem oder beiden Enden mit einem Haken oder einer Öse zur Fixierung an einem Fixierpunkt ausgestaltet sein.

In einer alternativen Ausgestaltung kann die Spannvorrichtung als Blattfeder, vorzugsweise als bistabile Blattfeder ausgebildet sein. Eine solche Blattfeder kann besonders gut zwischen von einer Wandung des Behältnisses entfernt verlaufenden Streben, bspw. eines Gitterkäfigs, eingespannt werden. Wenn eine Länge der Blattfeder auf einen Abstand zwischen den Streben sowie einen Abstand der Streben zu der Wandung des Behältnisses abgestimmt oder abstimmbar ist, kann eine besonders gute Verspannung erreicht werden. Ferner kann durch eine geeignete Materialwahl erreicht werden, dass die Blattfeder nach Außen gewölbt eingesetzt und anschließend mitsamt der Messanordnung auf den Behälter zugedrückt werden kann. Bei passender Abstimmung ist die Blattfeder auch in diesem Zustand stabil und drückt die Messanordnung an die Wandung des Behältnisses. Endseitig kann die Blattfeder bspw. mit Aufnahmen versehen sein, die an die Streben des Gitterkäfigs, insbesondere deren Durchmesser angepasst sind. Die Aufnahmen können bspw. Halbkreisförmig ausgebildet und stirnseitig an der Blattfeder befestigt sein.

In einer weiteren Ausgestaltung der Messanordnung kann die Spannvorrichtung als federbelasteter Spannarm ausgebildet sein. Ein solcher Spannarm kann ebenfalls an dem Behältnis selbst oder an einer damit verbundenen Einrichtung befestigt sein. Alternativ kann der Spannarm auch an einer Wandung oder Decke in unmittelbarer Nähe zu einem Standort des Behältnisses befestigt sein. Auf diese Weise kann ein- und dieselbe Messanordnung an einem festgelegten Standort für unterschiedliche Behältnisse, die dort abgestellt werden, benutzt werden.

Wird ein Behältnis, bspw. ein IBC mit Reinigungsmitteln immer am selben Ort einer Waschanlage abgestellt, bspw. weil dort die Entnahmestelle für das Reinigungsmittel angeordnet ist, so kann es sinnvoll sein, wenn die Messanordnung dort fest installiert wird. Auf diese Weise kann die Messanordnung für den jeweils im Einsatz befindlichen IBC verwendet werden und muss nicht von einem IBC zum nächsten ummontiert werden.

Der Spannarm kann bspw. mit einer Spannfeder in Form einer Schraubenfeder in Richtung des Behältnisses vorgespannt sein.

Die Befestigung kann neben einer örtlich festen Anordnung auch am Behältnis selbst erfolgen. Bspw. kann dies durch eine Manschette an einem Kragen einer Öffnung des Behältnisses oder an den Streben eines Gitterkäfigs eines IBC erfolgen.

Der Spannarm kann ferner lateral schwenkbar ausgebildet sein. Auf diese Weise wird es möglich, den Spannarm an einem Behältnis optimal zu positionieren, es kann aber auch möglich sein, den Spannarm zwischen zwei nebeneinander angeordneten Behältnissen zu schwenken. Bspw. kann der Spannarm, wenn ein erstes Behältnis leer ist mitsamt einer Entnahmevorrichtung, die ebenfalls an dem Spannarm befestigt sein kann, zu einem neben dem ersten Behältnis platzierten zweiten Behältnis geschwenkt werden.

Wenn der der Spannarm längenveränderlich ausgebildet ist kann dieser noch besser auf das Behältnis angepasst und so der Messaufnehmer optimal positioniert werden. Ferner kann durch eine längenveränderliche Ausgestaltung der Spannarm auch an Behältnisse verschiedener Höhe angepasst werden.

Insgesamt sind die Spannvorrichtungen der vorliegenden Anmeldung jeweils dafür geeignet, durch Ausdehnung oder Schrumpfung veränderliche Höhen der Behältnisse in gewissem Maße auszugleichen.

Die Messanordnung kann ferner eine Aktivierungseinrichtung aufweisen, die durch Anbringen der Messanordnung an dem Behältnis betätigbar ist.

Unter einer Aktivierungseinrichtung im Sinne der vorliegenden Anmeldung wird eine Anordnung verstanden, die so ausgestaltet ist, dass sie durch das ordnungsgemäße Anbringen der Messanordnung betätigt wird und bei einem Entfernen der Messanordnung von dem Behälter nicht mehr betätigt wird. Die Aktivierungseinrichtung in diesem Sinne ist also kein herkömmlicher Ein-, Ausschalter, mit dem die Messanordnung insgesamt manuell oder elektronisch eingeschaltet oder ausgeschaltet wird, sondern eine darüberhinausgehende Einrichtung.

Mittels der Aktivierungseinrichtung kann die Messanordnung aus einem inaktiven Betriebszustand in einen aktiven Betriebszustand und umgekehrt versetzt werden.

Insbesondere wird die Messanordnung, wenn die Aktivierungsanordnung beim Anbringen der Messanordnung an einem Behältnis betätigt wird, in einen aktiven Betriebszustand überführt und wenn die Aktivierungseinrichtung entsprechend bei einem Abnehmen von dem Behältnis nicht mehr betätigt ist, wird die Messanordnung aus dem aktiven Betriebszustand wieder in den inaktiven Betriebszustand, bspw. einen Standby-Betrieb überführt. Der inaktive Betriebszustand kann dabei verschiedenen Zustände umfassen.

Bspw. kann im inaktiven Betriebszustand lediglich eine Füllstandmessung deaktiviert sein, die Messanordnung aber weiterhin bspw. über Bediengeräte oder integrierte Bedieneinheiten bedienbar oder konfigurierbar sein. Alternativ kann die gesamte Messanordnung im inaktiven Betriebszustand in einen Sleepmodus überführt sein.

Die Aktivierungseinrichtung kann die Messanordnung auch lediglich dazu veranlassen, in dem aktiven Betriebszustand ermittelte Messwerte als gültig und/oder in dem im inaktiven Betriebszustand als ungültig zu kennzeichnen. Auf diese Weise wird für die übergeordnete Einheit oder das Anzeige und/oder Bediengerät klar, dass Messwerte, die ermittelt werden, während die Messanordnung nicht an dem Behältnis angeordnet oder befestigt ist, keine Gültigkeit haben, oder diese werden seitens der Übermittlungseinrichtung zur Einsparung von Energie erst gar nicht übermittelt oder in einem anderen Zeitintervall um Energie zu sparen.

Die Aktivierungseinrichtung ist erfindungsgemäß mechanisch betätigbar ausgebildet. Das bedeutet, dass die Aktivierungseinrichtung durch eine mechanische Krafteinwirkung, bspw. durch eine Druckkraft, oder eine Scherkraft oder durch das Einbringen eines Drehmoments aktivierbar ist. Wie bereits weiter oben beschrieben, soll die Aktivierungseinrichtung durch Anbringen der Messanordnung an dem Behältnis betätigbar sein. Das bedeutet mit einer mechanischen Betätigung der Aktivierungseinrichtung insbesondere, sodass die Aktivierungseinrichtung mechanisch betätigt wird, wenn die Messanordnung an dem Behältnis angebracht wird.

Die Aktivierungseinrichtung ist erfindungsgemäß derart ausgebildet, dass die Aktivierungseinrichtung durch ein Verspannen und/oder Verschrauben der Messanordnung mit dem Behältnis betätigbar ist. Durch das Verspannen und/oder Verschrauben der Messanordnung mit dem Behältnis wird eine Kraft auf die Aktivierungseinrichtung ausgeübt, sodass diese betätigt wird. Eine Kraftwirkung, die beim Verspannen und/oder Verschrauben der Messanordnung mit dem Behältnis ausgeübt wird, ist vorzugsweise derart dimensioniert, dass die Aktivierungseinrichtung sicher betätigt wird. Ferner kann so erreicht werden, dass durch die Aktivierungseinrichtung und die Information, ob diese betätigt ist, oder nicht, eine Information darüber besteht, ob die Messanordnung ordnungsgemäß, d.h. insbesondere, mit ausreichender Anpresskraft an dem Behältnis befestigt wurde.

Die Aktivierungseinrichtung kann dazu bspw. als Taster ausgebildet sein. Durch die Ausgestaltung als Taster, kann auf einfache Art und Weise eine Aktivierungseinrichtung bereitgestellt werden. Wird dieser Taster bspw. an einer Unterseite der Messanordnung angebracht, so kann die Aktivierungseinrichtung betätigt werden, wenn die Messanordnung an dem Behälter angeordnet und mit diesem verspannt oder verschraubt wird. Die Unterseite der Messanordnung ist in diesem Fall die Seite der Messanordnung, die dem Behältnis zugewandt ist, d.h. bei einem Radarfüllstandmessgerät insbesondere die Seite, die in Richtung einer Hauptabstrahlrichtung des Radarfüllstandmessgeräts weist.

Ein Taster im Sinne der vorliegenden Anmeldung ist eine Einrichtung, die einen elektrischen Kontakt nur dann schließt oder öffnet, wenn sie aktiv betätigt wird. Im vorliegenden Fall wird durch den Taster bspw. ein Kontakt geschlossen, was dazu führt, dass die Messanordnung in den aktiven Betrieb übergeht. Wird die Messanordnung von dem Behältnis entfernt und damit der Taster nicht mehr betätigt, wird die Messanordnung automatisch in den inaktiven Betrieb überführt.

Um eine Betätigung nur im Fall einer Anbringung an einem Behältnis sicherzustellen, kann die Aktivierungseinrichtung eine der Betätigung entgegengerichtete Vorspannung aufweisen. Dazu kann die Aktivierungseinrichtung bspw. eine oder mehrere Druckfedern aufweisen, die sicherstellen, dass eine Betätigung bei einem Entfernen der Messanordnung von dem Behältnis aufgehoben wird, oder eine Betätigung der Aktivierungseinrichtung bspw. erst ab einer vorgegebenen Anpresskraft erfolgt.

Um z.B. ein flächiges Aufliegen der Messanordnung an dem Behältnis sicherzustellen kann die Aktivierungseinrichtung auch ringförmig, insbesondere den Messaufnehmer der Messanordnung ringförmig umschließend ausgebildet sein. Eine solche Ausgestaltung kann bspw. sicherstellen, dass die Messanordnung durch das flächige Aufliegen auf einer Wandung des Behältnisses korrekt angeordnet und ausgerichtet ist.

Zusätzlich oder alternativ kann die Aktivierungseinrichtung eine Erkennungseinrichtung zur Erkennung eines Anbringens des Sensors an dem Behältnis aufweisen. Eine solche Erkennungseinrichtung kann bspw. als Sensor ausgebildet sein, mittels dem eine Anbringung der Messanordnung an dem Behältnis erkannt werden kann.

Der Sensor kann dazu bspw. als Magnetfeldsensor, Drucksensor, optischer Sensor oder Dehnungsmessstreifen ausgebildet sein.

Magnetfeldsensoren, Drucksensoren oder Dehnungsmessstreifen können jeweils erkennen, ob die Messanordnung mit ausreichendem Druck an dem Behältnis befestigt ist. Ein optischer Sensor kann bspw. erkennen, ob die Messeinrichtung korrekt an dem Behältnis angebracht wurde. Bspw. kann dafür an dem Behältnis eine Markierung, bspw. in Form eines Aufklebers oder einer farbigen Kennzeichnung angebracht werden, die von dem optischen Sensor erkannt und somit eine korrekte Anordnung bestätigt werden kann.

Der Sensor kann auch durch einen Magnetfeldsensor und einen in der Befestigungseinheit angebrachten Magnet aktiviert bzw. deaktiviert werden. So kann in einem Spanngurt bspw. ein Magnet integriert sein. Nur wenn der Spanngurt gespannt, der Sensor also montiert ist, ist der Magnet zu dem Magnetfeldsensor so ausgerichtet, dass dies eindeutig erkannt wird.

Bei einem Radarfüllstandmessgerät ist die Markierung dazu vorzugsweise an einer Stelle der Behältnisoberseite angebracht, die für eine korrekte Ausrichtung des Messgeräts für eine korrekte Füllstandmessung in dem Behältnis geeignet ist. Dies kann bspw. eine Stelle mit paralleler Ausrichtung zu einer Oberfläche eines bspw. flüssigen Füllguts oder eine Stelle mit geeigneter Ausrichtung auf einen Schüttgutkegel bei Verwendung mit Schüttgütern als Füllgut sein.

Weist die Aktivierungseinrichtung eine entsprechende Erkennungseinrichtung auf, so kann die Erkennungseinrichtung zusätzlich oder alternativ zu einer mechanischen Betätigung der Aktivierungseinrichtung zum Einsatz kommen.

Die Messanordnung kann vorzugsweise eine Befestigungsvorrichtung zum Befestigen der Messanordnung an dem Behältnis aufweisen. Eine mit der Messanordnung integrierte oder bereits an dieser angeordnete Befestigungsvorrichtung stellt eine sichere Befestigung sicher und kann insbesondere auf die verwendete Aktivierungseinrichtung abgestimmt sein. Das bedeutet, dass die Befestigungsvorrichtung so auf die Aktivierungseinrichtung abgestimmt ist, dass sie diese bei einer korrekten Befestigung an dem Behältnis zuverlässig betätigt.

Die Befestigungsvorrichtung kann bspw. als Spannvorrichtung ausgebildet sein, die als Spanngurt oder Spannbügel ausgestaltet sein kann. Eine Spannvorrichtung hat gegenüber anderen Befestigungsvarianten den Vorteil, dass ein Verspannen reversibel möglich ist und werkzeugfrei erfolgen kann. Auf diese Weise kann eine einfache und reversible Befestigungsmöglichkeit geschaffen werden, die von dem zuständigen Bedienpersonal ohne großen Aufwand durchgeführt werden kann.

Eine gute Wirkung wird erzielt, wenn die Spannvorrichtung in einer Axialrichtung des Sensors auf diesen wirkt. Eine Kraftwirkung in Axialrichtung hat den Vorteil, dass der Sensor an das Behältnis angepresst wird und so ein Aufliegen des Sensors an der Wandung des Behältnisses befördert wird.

Bspw. bei einem Radarfüllstandsensor kann so sichergestellt werden, dass dieser auf der Wandung flächig aufliegt und damit möglichst wenig Material-Luft-Übergänge sichergestellt werden.

Die Messanordnung ist vorzugsweise energieautark ausgestaltet. Das bedeutet, dass die Messanordnung insbesondere ohne eine leitungsgebundene externe Energieversorgung, bspw. durch ein Netzgerät oder eine übergeordnete Einheit ausgestaltet ist.

Dies kann bspw. dadurch erreicht werden, dass die Messanordnung batteriebetrieben ist und/oder eine Energy-Harvesting-Einheit zur Gewinnung von Energie aus der Umgebung der Messanordnung aufweist.

Ein erfindungsgemäßes Verfahren zum Betreiben einer Messanordnung gemäß einem der vorhergehenden Ansprüche, zeichnet sich dadurch aus, dass die Messanordnung beim Anbringen an einem Behälter aktiviert wird und bei einem Entfernen von dem Behälter wenigstens teilweise deaktiviert wird, wobei die Messanordnung durch eine mechanisch betätigbare Aktivierungseinrichtung (11) aktiviert wird und derart ausgebildet ist, dass die Aktivierungseinrichtung (11) durch ein Verspannen der Messanordnung (1) mit dem Behältnis (3) betätigbar ist.

Die vorliegende Erfindung wird nachfolgend anhand von Ausführungsbeispielen unter Bezugnahme auf die beigefügten Figuren eingehend erläutert. Es zeigen:
- Figur 1: ein erstes Ausführungsbeispiel einer Messanordnung,
- Figur 2: eine schematische Darstellung eines Längsschnitts durch die Messan-ordnung gemäß Figur 1,
- Figur 3: eine schematische Darstellung eines Längsschnitts durch ein zweites Ausführungsbeispiel einer Messanordnung,
- Figur 4: beispielhaft die Anordnung einer Messanordnung gemäß einer der Fig. 1 bis 3 an einem Behältnis mittels eines Spanngurtes,
- Figur 5: in den Teilfiguren a) bis c) die Anordnung einer Messanordnung an einem Behältnis mittels einer bistabilen Blattfeder,
- Figur 6: in den Teilfiguren a) und b) Verlängerungsmöglichkeiten einer bistabilen Spannfeder gemäß Figur 5,
- Figur 7: in den Teilfiguren a) bis c) die Anordnung einer Messanordnung an einem Behältnis mittels eines Spannarmes und
- Figur 8: ein Ausgestaltungsbeispiel eines solchen Spannarmes.

In den Figuren bezeichnen - soweit nicht anders angegeben - gleiche Bezugszeichen gleiche oder einander entsprechende Komponenten mit gleicher Funktion.

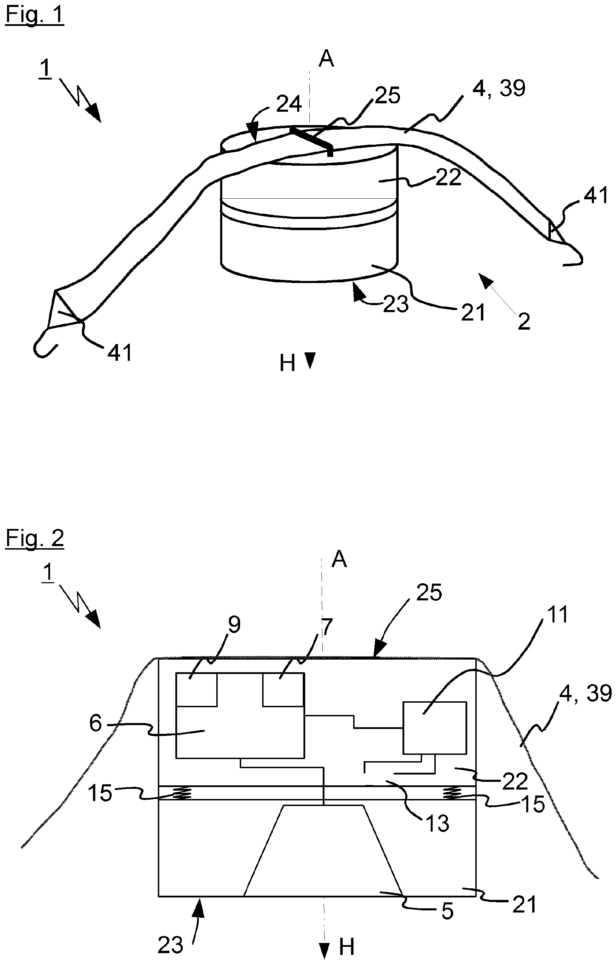

Figur 1 zeigt eine Messanordnung 1 gemäß der vorliegenden Anmeldung in perspektivischer Darstellung. Die Messanordnung 1 ist im vorliegend dargestellten Ausführungsbeispiel als Radarfüllstandmessgerät mit einem zylindrisch ausgebildeten Gehäuse 2 ausgebildet, wobei eine Hauptabstrahlrichtung H des Radarfüllstandmessgeräts in Axialrichtung A des zylindrischen Gehäuses 2 verläuft, d. h. eine Antenne des Radarfüllstandmessgerät derart angeordnet und ausgerichtet ist, dass die von der Antenne emittierte elektromagnetische Strahlung im Wesentlichen senkrecht zu einer Grundfläche des zylindrischen Gehäuses 2 austritt. Die Messanordnung 1 weist eine Befestigungsvorrichtung 4 auf, die im vorliegenden Ausführungsbeispiel als Spanngurt 39 ausgebildet ist. Der Spanngurt 39 ist aus einem elastischen Material gebildet und endseitig mit Haken 41 versehen, mittels derer der Spanngurt 39 beispielsweise an einem Käfig eines IBC (Intermediate Bulk Container) befestigt werden kann. Auf diese Weise ist es möglich, das Radarfüllstandmessgerät 1 mittels des Spanngurtes 39 an einem solchen Behältnis 3 werkzeuglos zu befestigen, wobei gleichzeitig sichergestellt wird, dass das Radarfüllstandmessgerät 1 mit der Grundfläche 23 des Gehäuses 2 an dem Behältnis 3 anliegt und so eine ordnungsgemäße Messung erfolgt. Das Gehäuse 2 weist zur Fixierung des Spanngurtes 39 an einer Deckfläche 24 des Gehäuses 2 einen Bügel 25 auf, der ein Verrutschen des Spanngurtes 39 relativ zu dem Gehäuse 2 verhindert.

Das Gehäuse 2 des Radarfüllstandmessgeräts 1 ist im vorliegenden Ausführungsbeispiel zweiteilig mit einem ersten Gehäuseteil 21 und einem zweiten Gehäuseteil 22 ausgebildet. Das erste Gehäuseteil 21 ist im vorliegenden Ausführungsbeispiel in Hauptabstrahlrichtung H liegend angeordnet, wo bei der zweite Gehäuseteil 22 oben liegend angeordnet ist. Die beiden Gehäuseteile 21, 22 sind relativ zueinander beweglich ausgestaltet, wobei - wie aus Figur 2 näher hervorgeht - zwischen den Gehäuseteilen 21, 22 Federn 15 angeordnet sind.

Figur 2 zeigt eine schematische Darstellung eines Längsschnitts entlang der Axialrichtung A durch die Messanordnung 1 aus Figur 1.

In dem Längsschnitt sind deutlich die Druckfedern 15 zu erkennen, mittels derer die Gehäuseteile 21, 22 in Axialrichtung A vorgespannt sind. Wird das Radarfüllstandmessgerät 1 mit dem Spanngurt 39 an einem Behältnis 3 befestigt, so liegt die Grundfläche 23 an dem Behältnis 3 an und durch die Spannung des Spanngurtes 39 werden die beiden Gehäuseteile 21, 22 entgegen der Kraft aus den Druckfedern 15 gegeneinander verschoben, sodass ein Taster 13 betätigt wird. Der Taster 13 ist im vorliegenden Ausführungsbeispiel Teil einer Aktivierungseinrichtung 11, die in der schematischen Darstellung der Figur 2 als einzelner Block im Inneren des Gehäuses 2 des Radarfüllstandmessgeräts 1 dargestellt ist. Durch ein Betätigen des Tasters 13 und damit der Aktivierungseinrichtung 11 wird eine Messelektronik 6 des Radarfüllstandmessgeräts 1 in einen aktiven Betriebszustand überführt und dadurch ein Messbetrieb initiiert.

Die Messelektronik 6, die im vorliegenden Ausführungsbeispiel ebenfalls nur schematisch dargestellt ist, weist eine Energieversorgung 9 in Form einer Batterie sowie eine Übermittlungseinrichtung 7 zur Übertragung der ermittelten Messergebnisse oder Messdaten an eine übergeordnete Einheit auf. Die Übertragungseinrichtung 7 kann beispielsweise als Funkmodul, das nach dem Bluetooth-Low-Energy-Standard arbeitet, ausgebildet sein. Die Messelektronik 6 ist mit einem als Hornantenne ausgebildeten Messaufnehmer 5 verbunden, der in dem ersten Gehäuseteil 21 so angeordnet ist, dass ein Messsignal in Hauptabstrahlrichtung H emittiert wird.

Es sei an dieser Stelle angemerkt, dass die in Figur 2 gewählt Darstellung der Messanordnung eine schematische Darstellung ist, deren einzelne Funktionsblöcke eine andere Aufteilung oder Zusammenfassung aufweisen können und durch weitere Funktionsblöcke ergänzt sein können.

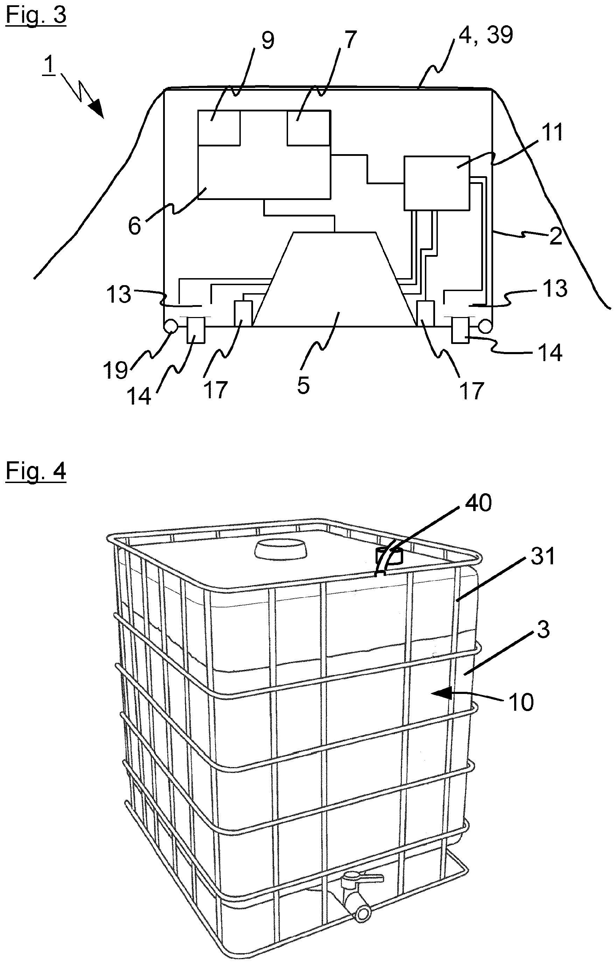

In Figur 3 ist ein zweites Ausführungsbeispiel einer Messanordnung 1 gemäß der vorliegenden Anmeldung gezeigt.

Das in Figur 3 dargestellte Ausführungsbeispiel im Vergleich zu dem Ausführungsbeispiel der Figur 2 die gleiche Funktionalität mit einer Aktivierungseinrichtung 11 auf, die auch im Ausführungsbeispiel der Figur 2 als einzelner Block im Inneren des Gehäuses 2 des Radarfüllstandmessgeräts 1 dargestellt ist. Im Unterschied zu der Ausgestaltung gemäß Figur 2 ist das Gehäuse 2 im vorliegenden Ausführungsbeispiel jedoch nicht mit zwei gegeneinander verschiebbaren Gehäuseteilen 21, 22 ausgestaltet, sondern eine Betätigung der Aktivierungseinrichtung 11 erfolgt über eine Mehrzahl von Tastern 13, die über einen in den Messaufnehmer 5 ringförmig umgebenden Betätigungsring 14, betätigt werden. Durch den Betätigungsring 14 kann sichergestellt werden, dass die Grundfläche 23 des Radarfüllstandmessgeräts 1 gleichmäßig und flach auf einer Wandung des Behältnisses 3 aufliegt. Die Taster 13, die vorzugsweise regelmäßig über den Umfang des Betätigungsrings 14 verteilt sind, sind elektrisch oder logisch in Reihe geschaltet, sodass nur bei einer Betätigung sämtlicher Taster 13 die Aktivierungseinrichtung 11 betätigt wird.

Ferner weist die Aktivierungseinrichtung 11 eine als optischer Sensor ausgebildete Erkennungseinrichtung 17 auf, mittels derer eine korrekte Anordnung des Radarfüllstandmessgeräts 1 an dem Behältnis 3 überprüft werden kann. An dem Behältnis 3 kann zu diesem Zweck eine optisch auslesbare Markierung, beispielsweise in Form eines Mikropunkt-Codes oder QR-Codes sind an einer für die Messung vorteilhaften Stelle angebracht sein, sodass mittels der Erkennungseinrichtung 17 eine Anordnung an dieser Stelle sichergestellt werden kann. Ein solcher QR-Code kann zudem für die Messung hilfreiche Information wie Behälterhöhe beinhalten. Ebenso kann ein solcher QR-Code dem Sensor die Häufigkeit einer Messwertübertragung vorgeben.

In dem in Figur 3 dargestellten Ausführungsbeispiel ist ferner eine umlaufende Dichtung 19 gezeigt, mittels derer ein Eindringen von Verschmutzungen oder Flüssigkeiten nach einem Anbringen der Messanordnung 1 an dem Behältnis 3 in einen Zwischenraum zwischen der Messanordnung 1 und dem Behältnis 3 verhindert werden kann.

Figur 4 zeigt in einer beispielhaften Ausgestaltung wie eine Messanordnung 1, wie sie in Bezug auf die Figuren 1 bis 3 beschrieben wurde mittels eines Spannbügels, an einem Behältnis 3, das vorliegend als Intermediate Bulk Container (IBC) ausgestaltet ist, angeordnet werden kann. Der Spannbügel 40 ist als federndes, bügelförmiges Element ausgebildet, das an Streben 31.1, 31.2 eines Gitterkäfigs des IBC 3 befestigt werden kann. Beispielsweise kann der Spannbügel 40 wie vorliegend aus einem Federstahl gefertigt sein und endseitig Aufnahmen aufweisen, die geeignet ausgebildet sind, den Spannbügel an den Streben 31.1, 31.2 des Gitterkäfigs 31 des IBC 3 derart zu verhaken, dass der Spannbügel 40 relativ zu dem Gitterkäfig 31 nicht verrutscht und der Messaufnehmer 5 gegen eine Wandung des IBC 3 gedrückt wird.

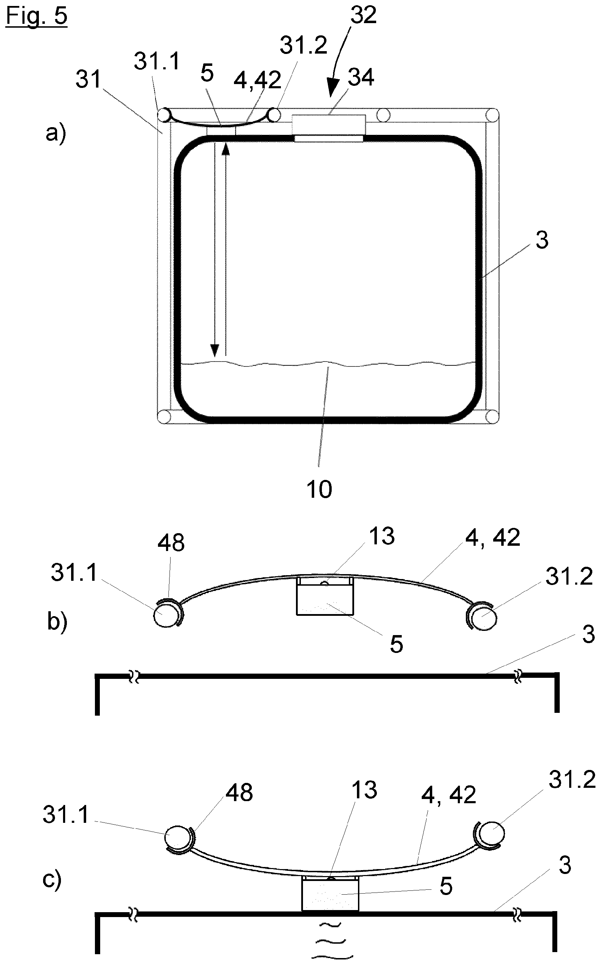

Figur 5 zeigt in den Teilfiguren a) bis c) die Anordnung einer Messanordnung 1 an einem Behältnis 3 mittels einer bistabilen Blattfeder 42.

In Figur 5a) ist ein aus Kunststoff gefertigter Intermediate Bulk Container (IBC) als Behältnis 3 gezeigt, wobei der Intermediate Bulkcontainer 3 (IBC) in einem Gitterkäfig 31 zur Stabilisierung angeordnet ist. Durch den Gitterkäfigs 31 können mehrere IBC 3 gestapelt und mittels Flurförderfahrzeugen transportiert werden. Der IBC 3 weist in einer Deckenwandung eine Öffnung 32 auf, die mittels eines Deckels 34 verschlossen ist. Die Öffnung 32 ist zentral in dem IBC 3 angeordnet und dient in der Regel zum Befüllen und/oder Entleeren des IBC 3.

Die Messanordnung 1 ist im vorliegenden Ausführungsbeispiel mittels der Blattfeder 42, die als bistabile Blattfeder ausgeführt ist an dem Gitterkäfigs 31 des IBC 3 befestigt, wobei der Messaufnehmer 5 gegen die Deckenwandung des IBC 3 gedrückt wird. Die Blattfeder 42, wie sie im Detail in den Figuren 5b) und 5c) gezeigt ist, ist an zwei Streben 31.1, 31.2 des Gitterkäfigs 31 derart befestigt, dass sie eine Biegung in Richtung des IBC 3 aufweist und so den Messaufnehmer 5 gegen die Deckenwandung presst.

Wie bereits ausgeführt, ist die Blattfeder 42 im vorliegenden Ausführungsbeispiel bistabil ausgeführt. Das bedeutet, dass die Blattfeder in zwei Positionen, wie sie in den Figuren 5b) und 5c) gezeigt sind, in Position stabil verharrt.

In Figur 5b) ist die Blattfeder 42 in einer Position gezeigt, in der sie konvex gebogen und damit der Messaufnehmer 5 von der Deckenwandung des IBC 3 abgehoben und dadurch über den Taster 13, der zwischen der Messaufnehmer 5 und der Blattfeder 42 angeordnet ist, deaktiviert ist. Die Blattfeder 42 weist endseitig zwei Aufnahmen 48 auf, die im vorliegenden Ausführungsbeispiel halbkreisförmig ausgestaltet sind und derart an die Streben 31.1, 31.2 des Gitterkäfigs 31 angepasst sind, dass sie diese etwa zur Hälfte umgreifen und so die Blattfeder 42 an den Streben 31.1, 31.2 haltern.

Durch eine Kraftwirkung auf die Blattfeder 42 in Richtung des IBC 3 wird die Blattfeder 42 derart verformt, dass sie eine konkave Biegung, d. h. vorliegend ausgehend von den Streben 31.1, 31.2 eine Biegung in Richtung des IBC 3 aufweist und somit den Messaufnehmer 5 gegen die Deckenwandung des IBC 3 drückt. Durch die Biegung der Blattfeder 42 wird ferner der Taster 13 betätigt, wodurch der Messaufnehmer 5 aktiviert wird.

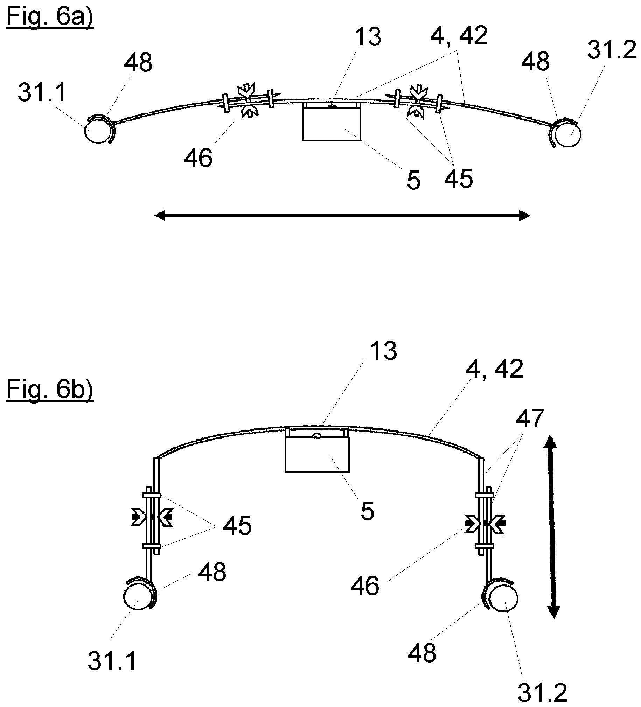

Figur 6a) zeigt eine Ausgestaltungsform der Befestigungsvorrichtung 4 als Blattfeder 42, wobei diese im Unterschied zu der Ausgestaltungsform in den Figuren 5a) bis 5c) horizontal verlängerbar ausgestaltet ist. Hierfür ist die Blattfeder 42 im vorliegenden Ausführungsbeispiel aus drei miteinander verbundenen und gegeneinander verschiebbaren Segmenten ausgestaltet, wobei die einzelnen Segmente der Blattfeder 42 über Bügel 45 zueinander ausgerichtet und durch Feststellschrauben 46 relativ zueinander fixierbar sind. Durch ein Verstellen der einzelnen Segmente der Blattfeder 42 relativ zueinander kann die Blattfeder 42 an einen Abstand der Streben 31.1, 31.2 des Gitterkäfigs 31 des IBC 3 angepasst werden. Hierdurch wird es ermöglicht, dass die Blattfeder 42 bei IBCs 3 eingesetzt werden kann, bei denen die Streben 31.1, 31.2 des Gitterkäfigs 31 unterschiedliche Abstände aufweisen.

Figur 6b) zeigt eine Ausgestaltungsform der Befestigungsvorrichtung 4 als Blattfeder 42, wobei diese eine Verlängerungsmöglichkeit in vertikaler Richtung aufweist.

Durch eine Verlängerungsmöglichkeit in vertikaler Richtung kann ein Abstand der Blattfeder 42 von dem Gitterkäfig 31 und einer Deckenwandung des IBC 3 variiert werden. Hierfür ist die Blattfeder 42 endseitig mit zwei vertikal ausgerichteten Verlängerungen 47 verbunden, die ihrerseits wenigstens zwei gegeneinander verschiebbaren und mittels Bügeln 45 relativ zueinander ausgerichtete Segmente aufweist. Die Segmente der Verlängerung 47 sind jeweils über Feststellschrauben 46 relativ zueinander fixierbar, sodass die Verlängerung 47 auf einer gewünschten Länge festgestellt werden kann.

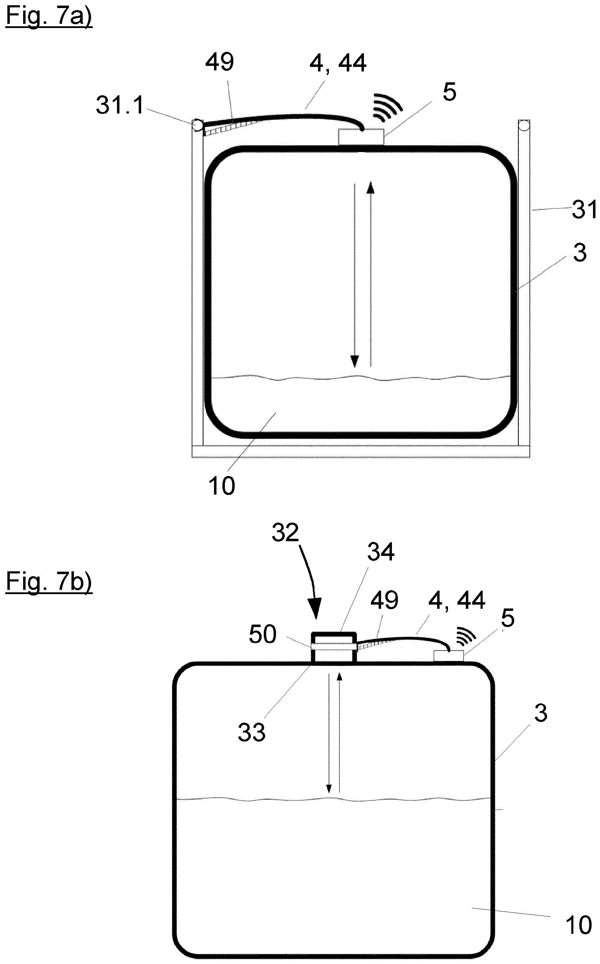

Die Figuren 7a) bis 7c) zeigen die Anordnung einer Messanordnung an einem Behältnis 3 mittels eines Spannarmes 44.

Der Spannarm 44 kann selbst starr oder flexibel ausgestaltet sein und ist einenends feststehend gelagert und weist anderenends den Messaufnehmer 5, der an dem IBC 3 befestigt werden soll, auf. In dem in Figur 7a) gezeigten Ausführungsbeispiel ist der Spannarm 44 einenends an einer Strebe 31.1 des Gitterkäfigs 31 des IBC 3 befestigt und mittels einer Zugfeder 49 in Richtung der Deckenwandung des IBC 3 vorgespannt. Dadurch, dass der Messaufnehmer 5 am anderen Ende des Spannarmes 44 angeordnet ist, wird dieser durch den Spannarm 44 in Richtung der Deckenwandung des IBC 3 gedrückt und so mit diesem verspannt.

In dem in Figur 7b) gezeigten Ausführungsbeispiel ist der Spannarm 44 mittels einer Klemmschelle an einem die Öffnung 32 des IBC 3 umgebenen Kragen 33 befestigt. Die Öffnung 32 ist am Kragen 33 endseitig durch einen Deckel 34 verschlossen.

Die Klemmschelle 50 umgreift den Kragen 33 vollständig und bildet damit ein Widerlager für den mittels der Zugfeder 49 in Richtung der Deckenwandung des IBC 3 vorgespannten Spannarm 44, an dem endseitig der Messaufnehmer 5 angeordnet ist.

Es sei an dieser Stelle angemerkt, dass als Widerlager für den Spannarm 44 jede geeignete Anformung an dem IBC 3 dienen kann.

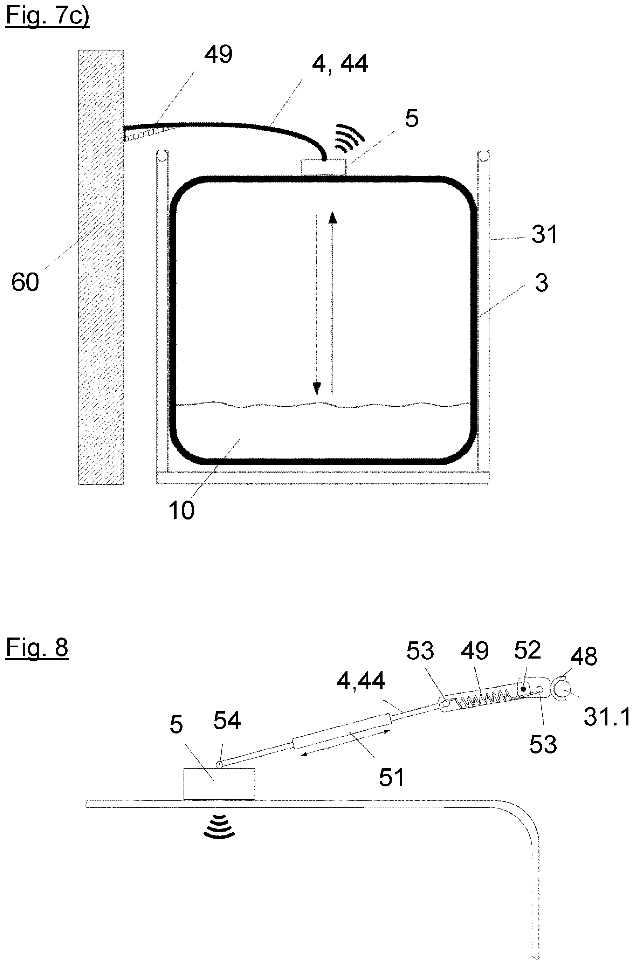

In Figur 7c) ist eine Ausgestaltungsform eines Spannarmes 44 gezeigt, der an einer Gebäudewand 60 in unmittelbarer Nachbarschaft zu seinem Aufstellungsort des IBC 3 gelagert ist. In dieser Ausführungsform kann der Messaufnehmer 5, der an dem Spannarm 44 endseitig angeordnet ist an dem so vorbestimmten Aufstellungsort für den IBC 3 verbleiben, während der jeweils für eine Messung vorgesehen IBC ausgetauscht werden kann. Zu diesem Zwecke kann der Spannarm 44 auch schwenkbar ausgeführt sein, um den Messaufnehmer 5 bei einem Behälterwechsel weg zu schwenken. Ist der Spannarm 44 schwenkbar ausgebildet und mit lang genügendem Ausleger, so kann der daran befestigte Messaufnehmer 5 auch für zwei benachbarte Stellplätze von Behältern eingesetzt werden. Der Messaufnehmer 5 kann dazu einfach auf einen benachbarten Behälter umgesetzt werden, in dem der Spannarm 44 auf diesen umgeschwenkt wird.

Ferner können durch einen Spannarm 44 unterschiedliche Behälterhöhen problemlos ausgeglichen werden. Auch Höhenveränderungen durch ausdehnende oder schrumpfende Behältnisse können durch die Federwirkung auch automatisch ausgeglichen werden.

Figur 8 zeigt im Detail ein Ausgestaltungsbeispiel für einen Spannarm 44.

Der Spannarm 44 ist in dem in Figur 8 dargestellten Ausführungsbeispiel einenends an einer Strebe 31.1 des Gitterkäfigs 31 des IBC 3 gelagert und trägt anderenends den Messaufnehmer 5, der über den Aufhängungspunkt 54 am Spannarm 44 befestigt ist. Der Spannarm 44 selbst ist im gezeigten Ausführungsbeispiel über eine Längenverstellung 51 in seiner Länge veränderlich ausgestaltet. Eine Vorspannung des Spannarmes 44 in Richtung des als IBC 3 ausgestalteten Behältnisses wird durch die Zugfeder 49 realisiert, die in einer Hülse angeordnet und durch eine relativ zu einem Drehpunkt 52 exzentrische Lagerung an einem Ankerpunkt 53 eine Schwenkbewegung des Spannarmes 44 in Richtung des IBC 3 bewirkt.

### Bezugszeichen

- 1: Messanordnung/Radarfüllstandmessgerät
- 2: Gehäuse
- 3: Behältnis, IBC
- 4: Befestigungsvorrichtung/Spannvorrichtung
- 5: Messaufnehmer
- 6: Messelektronik
- 7: Übermittlungseinrichtung
- 9: Energieversorgung
- 10: Medium
- 11: Aktivierungseinrichtung
- 13: Taster
- 15: Druckfeder
- 17: Erkennungseinrichtung/Sensor

- 21: Erster Gehäuseteil
- 22: Zweiter Gehäuseteil
- 23: Grundfläche
- 24: Deckfläche
- 25: Bügel

- 31: Gitterkäfig
- 31.1: Strebe
- 31.2: Strebe
- 32: Öffnung
- 33: Kragen
- 34: Deckel

- 39: Spanngurt
- 40: Spannbügel
- 41: Haken
- 42: Blattfeder
- 44: Spannarm
- 45: Bügel
- 46: Feststellschraube
- 47: Verlängerung
- 48: Aufnahme
- 49: Zugfeder
- 50: Klemmschelle
- 51: Längenverstellung
- 52: Drehpunkt
- 53: Ankerpunkt
- 54: Aufhängungspunkt

- 60: Gebäudewand

- A: Axialrichtung
- H: Hauptabstrahlrichtung

## Patentansprüche

1. Messanordnung (1) zur Anbringung an einem Behältnis (3) umfassend wenigstens einen Messaufnehmer (5), eine Übermittlungseinrichtung (7), eine Energieversorgung (9) und eine Befestigungsvorrichtung (4) zum Befestigen der Messanordnung (1) an dem Behältnis (3) **dadurch gekennzeichnet, dass**
die Befestigungsvorrichtung (4) als Spannvorrichtung ausgebildet ist und eine Aktivierungseinrichtung (11) umfasst, wobei die Aktivierungseinrichtung (11) mechanisch betätigbar ist und derart ausgebildet ist, dass die Aktivierungseinrichtung (11) durch ein Verspannen der Messanordnung (1) mit dem Behältnis (3) betätigbar ist.

2. Messanordnung (1) gemäß Anspruch 1,
**dadurch gekennzeichnet, dass**
die Spannvorrichtung (4) derart ausgestaltet ist, dass sie beschädigungsfrei an dem Behältnis (3) oder einer mit dem Behältnis (3) verbundenen Einrichtung anordenbar ist.

3. Messanordnung (1) gemäß Anspruch 2,
**dadurch gekennzeichnet, dass**
die Spannvorrichtung (4) derart ausgestaltet ist, dass sie werkzeugfrei an dem Behältnis (3) oder einer mit dem Behältnis (3) verbundenen Einrichtung anordenbar ist.

4. Messanordnung (1) gemäß einem der vorhergehenden Ansprüche,
**dadurch gekennzeichnet, dass**
die Spannvorrichtung (4) als Spanngurt (39) ausgebildet ist.

5. Messanordnung (1) gemäß einem der Ansprüche 1 bis 3,
**dadurch gekennzeichnet, dass**
die Spannvorrichtung (4) als Blattfeder (42), vorzugsweise als bistabile Blattfeder (42) ausgebildet ist.

6. Messanordnung (1) gemäß einem der Ansprüche 1 bis 3,
**dadurch gekennzeichnet, dass**
die Spannvorrichtung (4) als federbelasteter Spannarm (44) ausgebildet ist.

7. Messanordnung (1) gemäß Anspruch 6,
**dadurch gekennzeichnet, dass**
der Spannarm (44) lateral schwenkbar ausgebildet ist.

8. Messanordnung (1) gemäß einem der Patentansprüche 6 oder 7,
**dadurch gekennzeichnet, dass**
der Spannarm (44) längenveränderlich ausgebildet ist.

9. Messanordnung (1) gemäß einem der vorhergehenden Ansprüche,
**dadurch gekennzeichnet, dass**
die Spannvorrichtung (4) in einer Axialrichtung (A) des Sensors (17) auf den Sensor (17) wirkt.

10. Messanordnung (1) gemäß Anspruch 9,
**dadurch gekennzeichnet, dass**
die Aktivierungseinrichtung (11) als Taster (13) ausgebildet ist.

11. Messanordnung (1) gemäß einem der Ansprüche 9 bis 10,
**dadurch gekennzeichnet, dass**
die Messanordnung (1) und/oder die Aktivierungseinrichtung (11) eine der Aktivierung entgegengerichtete Vorspannung insbesondere eine Druckfeder (15) aufweist.

12. Messanordnung (1) gemäß einem der Ansprüche 9 bis 11,
**dadurch gekennzeichnet, dass**
die Aktivierungseinrichtung (11) eine Erkennungseinrichtung (17) zur Erkennung eines Anbringens der Messanordnung (1) an dem Behältnis (3) aufweist.

13. Messanordnung (1) gemäß Anspruch 12,
**dadurch gekennzeichnet, dass**
die Erkennungseinrichtung (17) als Sensor (17) ausgebildet ist.

14. Messanordnung (1) gemäß Anspruch 13,
**dadurch gekennzeichnet, dass**
der Sensor (17) als Magnetfeldsensor, Drucksensor, optischer Sensor oder Dehnungsmessstreifen ausgebildet ist.

15. Messanordnung (1) gemäß einem der vorhergehenden Ansprüche,
**dadurch gekennzeichnet, dass**
die Messanordnung (1) energieautark betrieben ist.

16. Messanordnung (1) gemäß einem der vorhergehenden Ansprüche,
**dadurch gekennzeichnet, dass**
die Messanordnung (1) batteriebetrieben ist.

17. Verfahren zum Betreiben einer Messanordnung (1) gemäß einem der vorhergehenden Ansprüche,
**dadurch gekennzeichnet, dass**
die Messanordnung (1) beim Anbringen an einem Behältnis (3) aktiviert wird und bei einem Entfernen von dem Behältnis (3) wenigstens teilweise deaktiviert wird, wobei die Messanordnung durch eine mechanisch betätigbare Aktivierungseinrichtung (11) aktiviert wird und derart ausgebildet ist, dass die Aktivierungseinrichtung (11) durch ein Verspannen der Messanordnung (1) mit dem Behältnis (3) betätigbar ist.

## Claims

1. A measuring assembly (1) for attachment to a container (3), comprising at least one measuring sensor (5), a transmission device (7), a power supply unit (9) and a fastening device (4) for fastening the measuring assembly (1) to the container (3),
**characterized in that**
the fastening device (4) is configured as a clamping device and comprises an activation device (11), wherein the activation device (11) can be mechanically actuated and is configured such that the activation device (11) can be actuated by clamping the measuring assembly (1) to the container (3).

2. The measuring assembly (1) according to claim 1,
**characterized in that**
the clamping device (4) is configured such that it can be arranged in a damage-free manner on the container (3) or a device connected to the container (3).

3. The measuring assembly (1) according to claim 2,
**characterized in that**
the clamping device (4) is configured such that it can be arranged on the container (3) or a device connected to the container (3) without tools.

4. The measuring assembly (1) according to any one of the preceding claims,
**characterized in that**
the clamping device (4) is configured as a clamping belt (39).

5. The measuring assembly (1) according to any one of the claims 1 to 3,
**characterized in that**
the clamping device (4) is configured as a leaf spring (42), preferably as a bistable leaf spring (42).

6. The measuring assembly (1) according to any one of the claims 1 to 3,
**characterized in that**
the clamping device (4) is configured as a spring-loaded clamping arm (44).

7. The measuring assembly (1) according to claim 6,
**characterized in that**
the clamping arm (44) is configured to be laterally pivotable.

8. The measuring assembly (1) according to any one of the patent claims 6 or 7,
**characterized in that**
the clamping arm (44) is configured to be variable in length.

9. The measuring assembly (1) according to any one of the preceding claims,
**characterized in that**
the clamping device (4) acts on the sensor (17) in an axial direction (A) of the sensor (17).

10. The measuring assembly (1) according to claim 9,
**characterized in that**
the activation device (11) is configured as a push button (13).

11. The measuring assembly (1) according to any one of the claims 9 to 10,
**characterized in that**
the measuring assembly (1) and/or the activation device (11) has a bias in the direction opposite to activation, in particular a compression spring (15).

12. The measuring assembly (1) according to any one of the claims 9 to 11,
**characterized in that**
the activation device (11) has a recognition device (17) for recognizing an attaching of the measuring assembly (1) to the container (3).

13. The measuring assembly (1) according to claim 12,
**characterized in that**
the recognition device (17) is configured as a sensor (17).

14. The measuring assembly (1) according to claim 13,
**characterized in that**
the sensor (17) is configured as a magnetic field sensor, pressure sensor, optical sensor or strain gauge.

15. The measuring assembly (1) according to any one of the preceding claims,
**characterized in that**
the measuring assembly (1) is operated in an energy self-sufficient manner.

16. The measuring assembly (1) according to any one of the preceding claims,
**characterized in that**
the measuring assembly (1) is battery-operated.

17. A method for operating a measuring assembly (1) according to any one of the preceding claims,
**characterized in that**
the measuring assembly (1) is activated upon being attached to a container (3) and at least partially deactivated upon being removed from the container (3), wherein the measuring assembly is activated by an activation device (11), which can be mechanically actuated, and is configured such that the activation device (11) can be actuated by clamping the measuring assembly (1) to the container (3).

## Revendications

1. Ensemble de mesure (1) destiné à être monté sur un récipient (3), comprenant au moins un capteur (5), un dispositif de transmission (7), une alimentation en énergie (9) et un dispositif de fixation (4) pour fixer ledit ensemble de mesure (1) sur le récipient (3), **caractérisé par le fait que** le dispositif de fixation (4) est conçu sous la forme d'un dispositif de serrage et comprend un dispositif d'activation (11), dans lequel le dispositif d'activation (11) peut être actionné de manière mécanique et est conçu de telle sorte que le dispositif d'activation (11) peut être actionné en serrant le dispositif de mesure (1) sur le récipient (3).

2. Ensemble de mesure (1) selon la revendication 1, **caractérisé par le fait que** le dispositif de serrage (4) est conçu de telle sorte qu'il peut être disposé sans être endommagé sur le récipient (3) ou sur un dispositif lié au récipient (3).

3. Ensemble de mesure (1) selon la revendication 2, **caractérisé par le fait que** le dispositif de serrage (4) est conçu de telle sorte qu'il peut être disposé sans outil sur le récipient (3) ou sur un dispositif lié au récipient (3).

4. Ensemble de mesure (1) selon l'une quelconque des revendications précédentes, **caractérisé par le fait que** le dispositif de serrage (4) est réalisé sous la forme d'une courroie de tension (39).

5. Ensemble de mesure (1) selon l'une quelconque des revendications 1 à 3, **caractérisé par le fait que** le dispositif de serrage (4) est réalisé sous la forme d'un ressort à lame (42), de préférence sous la forme d'un ressort à lame (42) bistable.

6. Ensemble de mesure (1) selon l'une quelconque des revendications 1 à 3, **caractérisé par le fait que** le dispositif de serrage (4) est réalisé sous la forme d'un bras de serrage (44) sollicité par ressort.

7. Ensemble de mesure (1) selon la revendication 6, **caractérisé par le fait que** le bras de serrage (44) est conçu de manière à pouvoir pivoter latéralement.

8. Ensemble de mesure (1) selon l'une quelconque des revendications 6 ou 7, **caractérisé par le fait que** le bras de serrage (44) est conçu de manière à être variable en longueur.

9. Ensemble de mesure (1) selon l'une quelconque des revendications précédentes, **caractérisé par le fait que** le dispositif de serrage (4) agit sur le capteur (17) selon une direction axiale (A) du capteur (17).

10. Ensemble de mesure (1) selon la revendication 9, **caractérisé par le fait que** le dispositif d'activation (11) est réalisé sous la forme d'un boutonpoussoir (13).

11. Ensemble de mesure (1) selon l'une quelconque des revendications 9 à 10, **caractérisé par le fait que** ledit ensemble de mesure (1) et/ou le dispositif d'activation (11) présente une précontrainte s'opposant à l'activation, en particulier un ressort de compression (15).

12. Ensemble de mesure (1) selon l'une quelconque des revendications 9 à 11, **caractérisé par le fait que** le dispositif d'activation (11) présente un dispositif de détection (17) destiné à détecter un montage de l'ensemble de mesure (1) sur le récipient (3).

13. Ensemble de mesure (1) selon la revendication 12, **caractérisé par le fait que** le dispositif de détection (17) est réalisé sous la forme d'un capteur (17).

14. Ensemble de mesure (1) selon la revendication 13, **caractérisé par le fait que** le capteur (17) est réalisé sous la forme d'un capteur de champ magnétique, d'un capteur de pression, d'un capteur optique ou d'une jauge de contrainte.

15. Ensemble de mesure (1) selon l'une quelconque des revendications précédentes, **caractérisé par le fait que** l'ensemble de mesure (1) fonctionne de manière autonome en énergie.

16. Ensemble de mesure (1) selon l'une quelconque des revendications précédentes, **caractérisé par le fait que** l'ensemble de mesure (1) est alimenté par batterie.

17. Procédé destiné à faire fonctionner un ensemble de mesure (1) selon l'une quelconque des revendications précédentes, **caractérisé par le fait que** ledit ensemble de mesure (1) est activé lorsqu'il est monté sur un récipient (3) et est désactivé, au moins en partie, lorsqu'il est retiré du récipient (3), dans lequel l'ensemble de mesure est activé par un dispositif d'activation (11) actionnable de manière mécanique et est conçu de telle sorte que le dispositif d'activation (11) peut être actionné en serrant l'ensemble de mesure (1) sur le récipient (3).
